# EUROPÄISCHE PATENTSCHRIFT

(11) **EP 3 292 549 B1**
(45) Veröffentlichungstag und Bekanntmachung des Hinweises auf die Patenterteilung: **13.07.2022**
(21) Anmeldenummer: 16732927.5
(22) Anmeldetag: 30.04.2016
(51) Int. Cl.: G06F 3/041, G08G 5/00, G01C 21/36

(54) **ELEKTRONISCHES SYSTEM UND VERFAHREN ZUR PLANUNG UND DURCHFÜHRUNG EINER MIT EINEM FAHRZEUG DURCHZUFÜHRENDEN MISSION**
ELECTRONIC SYSTEM AND METHOD FOR PLANNING AND ACCOMPLISHING A MISSION TO BE ACCOMPLISHED BY MEANS OF A VEHICLE
SYSTÈME ÉLECTRONIQUE ET PROCÉDÉ DE PLANIFICATION ET D'EXÉCUTION D'UNE TÂCHE DEVANT ÊTRE RÉALISÉE AVEC UN VÉHICULE

(30) Priorität: 06.05.2015 DE 102015005853
(43) Veröffentlichungstag der Anmeldung: 14.03.2018
(73) Patentinhaber: HENSOLDT Sensors GmbH, 82024 Taufkirchen (DE)
(72) Erfinder: WANKMÜLLER, Erik, 55543 Bad Kreuznach (DE); SCHANNE, Thomas, 88697 Bermatingen (DE)
(74) Vertreter: LifeTech IP Spies & Behrndt Patentanwälte PartG mbB
(86) Internationale Anmeldenummer: PCT/DE2016/000190
(87) Internationale Veröffentlichungsnummer: WO 2016/177359

(56) Entgegenhaltungen:
- WO-A2-2014/070872
- CN-U- 202 686 187
- CN-U- 203 920 606
- US-A1- 2014 327 625
- US-B1- 8 633 913

## Beschreibung

Die Erfindung betrifft ein elektronisches System zur Planung und Durchführung einer mit einem Fahrzeug durchzuführenden Mission, insbesondere bei unterschiedlichen Anforderungen bei der Planung und späteren Durchführung der Mission, sowie eines damit verbundenen Verfahrens.

Insbesondere in der Luftfahrt, aber auch bei der Straßennavigation, bei Kraftfahrzeugen oder der Schiffsnavigation werden Planungen auf einem elektronischen System durchgeführt, z.B. Start- und Endpunkt einer Navigation, Zwischenpunkte und weitere Parameter festgelegt. Das Ergebnis der Planung wird später genutzt, um die Mission durchzuführen, in der Luftfahrt insbesondere die Flugdurchführung selbst. Beide Arbeiten - die Planung und die Durchführung - am selben System durchzuführen, wird entweder gar nicht gemacht oder ist bei den bekannten Systemen wenig gebrauchstauglich, da für beide Arbeiten deutlich sich unterscheidende Anforderungen an das Bedienkonzept gestellt werden.

Das Pro Line Fusion^{®} Integrated Avionic System von Rockwell Collins ist ein System mit berührungsempfindlichen Anzeigegeräten zur Flugplanung und - steuerung, das zusammen mit einer externen Tastatur mit Trackballcontroller und Bedienknöpfen bedient wird.

Die Firma Garmin bietet im Luftfahrtbereich die Anzeigegeräteserie G3000 oder G5000 als Komponenten eines Systems zur Flugplanung und -steuerung an. Dabei handelt es sich um Anzeigegeräte, die über einen externen, berührungsempfindlichen Touchscreen Controller, z.B. die Version GTC 570, Eingabe und Bedienung der Anzeigegeräte ermöglicht. Dabei wird durch diesen Touchscreen Controller die Vielzahl der mechanischen Knöpfe, Buttons und Wahlschalter speziell in Luftfahrzeugen ersetzt. Die Bedienung erfolgt über Buttons / Menüs, die auf der Anzeigefläche des Touchscreen Controllers genau zu treffen sind, also eine Blickfokussierung auf den Controller benötigen. Eine Ausgabe erfolgt auf dem Anzeigegerät.

Generell ist bei einem gattungsgemäßen System eine direkte Interaktion mit dem System notwendig, wobei der Nutzer sich ausschließlich auf diese Arbeit konzentrieren kann. Insbesondere bieten sich deswegen Möglichkeiten in der Benutzerführung, die die Planung erheblich erleichtern. So können durch einfache Gesten auf dem Bildschirm Optionen ausgewählt, Einstellungen und Eingaben gemacht und Informationen abgerufen werden. Der Fokus des Nutzers, insbesondere die Blickrichtung und der Sichtbereich aber auch die Konzentration liegen dabei voll auf dem System und lassen keine andere Arbeit in diesem Zeitraum zu. Diese Arbeiten werden vorzugsweise am Boden, in einem ruhigen Büro oder auf einem Tablet PC im Cockpit durchgeführt. Nach dem Stand der Technik werden diese Arbeiten immer mehr digital unter Verwendung eines Touchscreens anstelle von früher gebräuchlichen Papierkarten gelöst, wobei insbesondere interaktive Flächen, wie z.B. Buttons, auf dem Display liegen und für die Bedienung genau getroffen werden müssen. Dies ermöglicht eine sehr effiziente Durchführung der Planungsaktivität.

Bei der Durchführung der Mission ist das Planungssystem nur noch ein Hilfsmittel. Die Konzentration des Nutzers liegt auf anderen Schwerpunkten, z.B. der Durchführung des Fluges oder der Steuerung des Kraftfahrzeuges. Das System muss die Konzentration des Nutzers so wenig auf sich lenken wie möglich und muss insbesondere eine gleichzeitige Bearbeitung der wichtigeren Aufgaben zulassen. So muss z.B. während eines Fluges, aber auch während einer Autofahrt, die Sicht des Nutzers nach außen möglichst ununterbrochen gegeben sein. Um die Zeit zu verkürzen, während der die volle Sicht des Nutzers nach außen unterbrochen ist, muss das Display also so nah wie möglich an der Außensicht sein. In vielen Anwendungen ist das Display so angeordnet, dass die periphere Sicht nach außen weiter möglich ist und Notsituationen trotzdem erkannt werden können. Die Bedienung des Systems erfolgt vorzugsweise blind, d.h. ohne dass der Nutzer auf die Bedienelemente selbst schauen muss. Ein Feedback erfolgt entweder haptisch, akustisch oder optisch nah an der Sichtlinie, die der Nutzer für die Durchführung der anderen Aufgaben benötigt. Auch muss der Nutzer die Bedienelemente blind finden können. Bekannte Geräte entsprechen diesen Anforderungen, in dem die Bedienelemente in guter Reichweite angeordnet sind und zur blinden Nutzung eingerichtet sind, wie z.B. Schalter, Drehknöpfe oder auch Touchpads.

Ein klassischer berührungsempfindlicher Bildschirm, ein sogenannter Touchscreen, mit interaktiven Buttons, ist für diesen Zweck ausgeschlossen, da die Buttons blind nicht gefunden werden können und ein Feedback ebenfalls auf dem - für den Nutzer nicht direkt einsehbaren - Touchscreen erfolgt. Zudem ist die Anordnung der Eingabe- und Ausgabegeräte vom entsprechenden Fahrzeug abhängig, wodurch sich spezifische Probleme ergeben. In einem Flugzeug kann die Interaktion mit Geräten in ergonomischer Weise stattfinden. In einem Hubschrauber dagegen ist die Anordnung auf Grund der benötigten Rundumsicht sowie der kontinuierlichen Interaktion des Piloten mit dem Luftfahrzeug ungünstiger. Aufgrund der engen Platzverhältnisse steht für Eingabegeräte nur ein sehr begrenzter Raum in Reichweite des Piloten zu Verfügung, so dass sich Anzeigegeräte auch im weiter entfernten Umfeld des Piloten befinden. Eine ergonomische Anordnung der Bildschirm- Steuerung und des Bildschirms in direkter Nachbarschaft, die eine Interaktion bei der Eingabe mit dem Bildschirm erlauben könnte oder auch ein Touchscreen zur Ein- und Ausgabe, ist insbesondere in einem Hubschrauber nicht möglich.

Ein konventionelles System zur multimodalen Wechselwirkung zur Verringerung der Ablenkung eines Fahrzeugführers während der Fahrt ist in WO 2014/070872 A2 offenbart. Außerdem offenbart CN 203 920 606 U ein Fahrzeuglenkrad mit einer integrierten Videoanzeige. US 2014/327625 A1 offenbart ein Datenverarbeitungsgerät, bei dem es zu einem "Klonen" eines Touchscreens mit einer externen Anzeige kommt, während bei dem Touchscreen die Hintergrundbeleuchtung abgeschaltet wird. In US 8,633,913 B1 wird eine bekannte Touch-Schnittstelle und eine Steuerung für eine Anzeige eines Flugzeuges offenbart.

Es ist Aufgabe der Erfindung, ein System zur Planung und Durchführung einer Mission zu schaffen, das sowohl in der Planungsphase als auch in der Durchführungsphase in ergonomischer und intuitiver Weise bedient werden kann, wobei die speziellen Anordnungen und Besonderheiten in einem Luftfahrzeug und speziell in einem Hubschrauber zu beachten sind.

Diese Aufgabe wird mit dem Elektronischen System zur Planung und Durchführung einer mit einem Fahrzeug durchzuführenden Mission (im nachfolgenden auch kurz System genannt) gemäß Patentanspruch 1 sowie dem Verfahren gemäß Patentanspruch 6 gelöst. Vorteilhafte Ausführungen der Erfindung sind Gegenstand von Unteransprüchen.

Das System umfasst zwei Anzeigegeräte, wobei eines davon (im Folgenden als erstes Anzeigegerät bezeichnet) mit einem berührungsempfindlichem Bildschirm ausgestattet ist.

Das erste Anzeigegerät weist zwei separate Bedienungsmodi auf, wobei in einem Planungsmodus der Bildschirm des ersten Anzeigegeräts zur Eingabe und Ausgabe eingerichtet ist, in einem Durchführungsmodus der Bildschirm des ersten Anzeigegeräts ausschließlich zur indirekten Eingabe per Gestensteuerung in der Art eines Multi-Touchpad eingerichtet ist, und ein Zusammenwirken zwischen ersten und zweiten Anzeigegerät derart bewirkt werden kann, dass die über den Bildschirm des ersten Anzeigegeräts im Durchführungsmodus vornehmbaren Eingaben zur Steuerung der Anzeige auf dem zweiten Anzeigegerät dienen.

Das zweite Anzeigegerät wird bevorzugt an einer Position im Fahrzeugcockpit angeordnet, die für die Fahrt- oder Flugdurchführung günstig ist, z.B. nah an der Sichtlinie eines Piloten nach außen. Das erste Anzeigegerät wird in ergonomisch günstiger Lage zur händischen Bedienung, z.B. in der Mittelkonsole angebracht. Das System kann allgemein in jeder Art von Fahrzeug verwendet werden, für das zunächst eine Arbeitsvorbereitung oder Planung durchgeführt wird und diese Daten dann bei der Durchführung der Mission zur Anzeige genutzt werden z.B. einem Automobil, Schiff oder Luftfahrzeug. Das System eignet sich insbesondere zum Einsatz in einem Hubschrauber.

Bei der Flugplanung wird das erste Anzeigegerät in einem ersten Bedienungsmodus (im Folgenden Planungsmodus genannt) genutzt, sowohl zur Eingabe als auch zur Visualisierung der Daten. Es kann neben seinem berührungsempfindlichen Bildschirm (Multi-Touchscreen) eine integrierte Datenverarbeitungseinheit CPU aufweisen. Das erste Anzeigegerät entspricht dann nach Aufbau und Funktion im Wesentlichen einem handelsüblichen Tablet-PC. Alternativ ist auch eine baulich separierte Datenverarbeitungseinheit CPU möglich.

Im Planungsmodus erfolgt die Bedienung des Multi-Touchscreens wie bei einem heute üblichen Tablet PC. Auf dem zweiten Anzeigegerät können während des Planungsmodus ebenfalls Daten angezeigt werden. Diese sind aber nicht zwingend erforderlich, sondern können zur weiteren Unterstützung genutzt werden, wobei die Daten eine Spiegelung oder Erweiterung der Anzeigefläche des ersten Anzeigegeräts sind oder zusätzliche Informationen beinhalten können.

Beim Übergang in die Flugdurchführung werden die auf dem ersten Anzeigegerät vorbereiteten Daten, z.B. die Karte und deren Maßstab, der Flugplan usw., auf das zweite Anzeigegerät geschoben (d.h. es erfolgt eine Übertragung der Daten zur Ausgabe, insbesondere zur visuellen Darstellung auf dem Bildschirm), wo sie dem Nutzer während des Fluges angezeigt werden. Das Übertragen der Daten kann über eine Schiebegeste oder eine andere definierte Geste z.B. Mehrfingerwischen, 3-Finger-Klicken etc. auf dem Multi-Touchscreen des ersten Anzeigegeräts erfolgen.

Das zweite Anzeigegerät kann als Display, Touchscreen, Head-up Display oder als anderes projizierendes Gerät ausgebildet sein, wobei auch eine Kombination oder eine Mehrzahl der genannten Geräte vorliegen kann z.B. Head-up Display zur Darstellung essentieller Flugparameter in Verbindung mit einem Display, das die Gesamtinformationen beinhaltet.

Für die Flugdurchführung wird der Bildschirm des ersten Anzeigegeräts vom Planungsmodus in den Durchführungsmodus umgeschaltet. Dieses Umschalten wird über das erste Anzeigegerät bewirkt. Auf dem ersten Anzeigegerät sind dann keine flugrelevanten Daten mehr zu sehen. Es erfolgt auf dem Bildschirm entweder gar keine Anzeige oder es kann vorteilhaft am oberen Bildschirmrand eine Seiten-/Verschiebeleiste, ähnlich einer Taskleiste wie bei Windows Betriebssystemen, dargestellt werden. Über diese Taskleiste kann z.B. mit einer Schiebegeste ein Umschalten auf den Planungsmodus bewirkt werden.

Die Eingabe zur Bedienung erfolgt in der Durchführungsphase während des Fluges zwar nach wie vor über das erste Anzeigegerät, dafür ist allerdings kein Blick auf dieses Gerät notwendig, da die Steuerung über Gesten nach der Art eines Multi-Touchpad erfolgt und die visuelle Reaktion des Systems auf dem zweiten Anzeigegerät erfolgt. Das erste Anzeigegerät wird also überwiegend nicht mehr als Touchscreen (das Eingabe und Ausgabe ermöglicht) sondern nur noch als Multi-Touchpad (also nur zur Eingabe) genutzt. Somit kann während des Fluges die Sicht nach Außen beibehalten werden, und dennoch das erste Anzeigegerät zur Eingabe bzw. Steuerung verwendet werden.

Auch eine Kombination mehrerer gleichartiger Systeme zur Bildung in der Luftfahrt gebräuchlicher redundanter Systeme ist möglich. Dabei erfolgt die Kommunikation der Systeme über eine Schnittstelle, die eingerichtet ist, einen Datenaustausch mit dem zweiten gleichartigen System zu ermöglichen, wobei der Datenaustausch Planungsdaten oder Steuerdaten beinhalten kann.

Vorteilhaft bei Verwendung zweier gleichartiger Systeme ist die Möglichkeit, durch den Copiloten eine Neuplanung oder komplexe Umplanung einer Mission während des Fluges durchführen zu können und diese auf das Pilotensystem übertragen zu können. Somit kann die Fokussierung des Piloten auf die Flugdurchführung beibehalten werden.

Der Ablauf zur Planung und Durchführung der Mission erfolgt gemäß dem erfindungsgemäßen Verfahren in den folgenden Schritten:
- Planung der Mission im Planungsmodus des ersten Anzeigegeräts, wobei über dessen berührungsempfindlichen Bildschirm sowohl eine Eingabe als auch eine Ausgabe von Daten durchgeführt wird,
- Übertragung der so erzeugten Planungsdaten vom ersten Anzeigegerät auf das zweite Anzeigegerät,
- Umschalten des ersten Anzeigegeräts vom Planungsmodus in den Durchführungsmodus zur Anzeige und Durchführung der Mission, bei dem der Bildschirm des ersten Anzeigegeräts die Funktion eines Multi-Touchpads übernimmt, wobei über den Bildschirm ausschließlich indirekte Eingaben mittels Gestensteuerung durchgeführt werden, und diese Eingaben die Anzeige auf dem zweiten Anzeigegerät steuern.

Die Erfindung hat insbesondere die folgenden Vorteile:
Die Gebrauchstauglichkeit des Systems, hier vor allem des Kartensystems, wird stark erhöht. Damit wird insbesondere die Effizienz während der Missionsplanung deutlich verbessert. Während der Missionsdurchführung wird die Arbeitsbelastung des Piloten deutlich verringert, was die Fehleranfälligkeit reduziert und somit die Flugsicherheit erhöht.

Diese Vorteile werden erreicht unter Nutzung eines Geräts (erstes Anzeigegerät), dass sowohl für die Missionsplanung als auch für die Missionsdurchführung eingesetzt wird. Daraus resultieren wirtschaftliche Vorteile, Kostenreduzierungen und größere Variabilität bei der Reaktion auf Kundenbedürfnisse.

Die Erfindung ist besonders für Helikopter von Bedeutung, da hier die Außensicht von elementarer Bedeutung ist und beide Hände des Piloten zum Fliegen gebraucht werden. Im Gegensatz z.B. zu einem Linienflugzeug, erfordert der Helikopter eine viel größere Aufmerksamkeit des Piloten, um das Luftfahrzeug überhaupt stabil in der Luft zu halten. Die Erfindung leistet hier einen wesentlichen Beitrag, um die Arbeitsbelastung des Piloten möglichst niedrig zu halten.

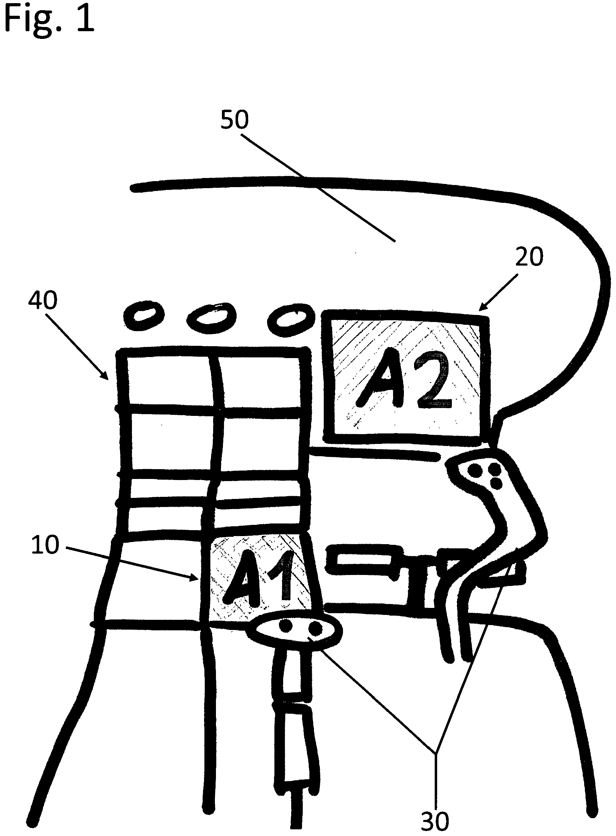

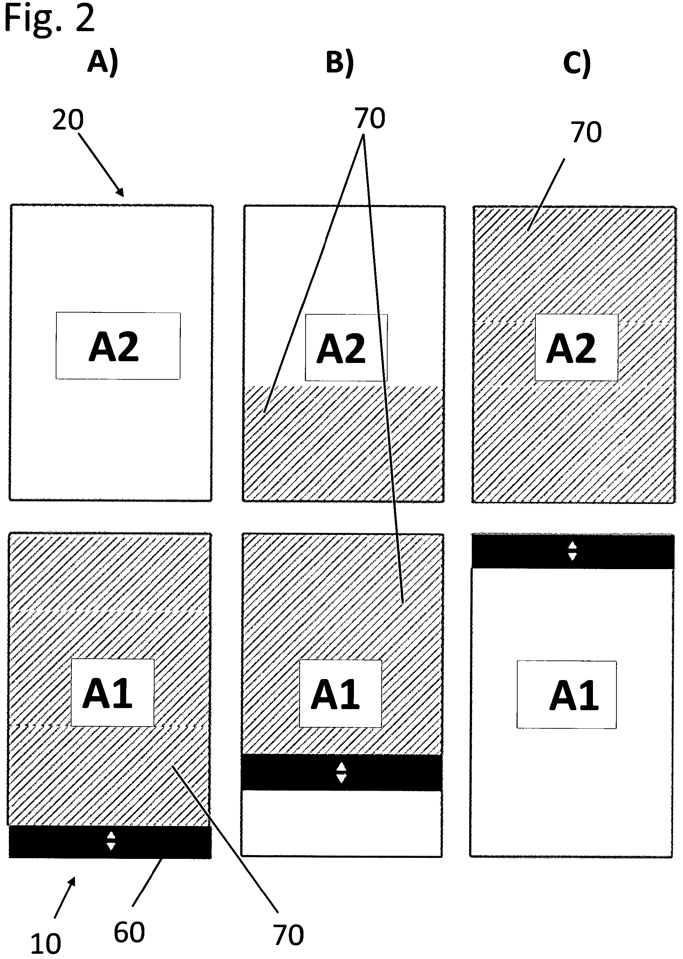

Die Erfindung wird anhand eines konkreten Ausführungsbeispiels unter Bezugnahme auf Fig. 1 und 2 näher erläutert:
Es zeigen:
- Fig. 1: ein erfindungsgemäßes System in einer möglichen Einbaukonfiguration in einem Helikopter (schematische Darstellung),
- Fig. 2: eine Darstellung der Anzeigegeräte des Systems und deren erfindungsgemäßes Zusammenwirken beim Wechsel der Bedienungsmodi.

Die folgende Beschreibung basiert auf einem Einsatz der erfindungsgemäßen Vorrichtung in einem Helikopter, wobei der Fachmann dies jedoch leicht auf Anwendungsfälle in anderen Fahrzeugen übertragen kann.

Fig. 1 zeigt eine mögliche Einbaukonfiguration des Systems zur Planung und Durchführung einer mit einem Fahrzeug durchzuführenden Mission in einem Hubschrauber.

Das System umfasst ein erstes Anzeigegerät 10, und ein zweites Anzeigegerät 20. Der Einbau des ersten Anzeigegeräts 10 erfolgt innerhalb des Cockpits in eine Instrumententafel 40 in der Mittelkonsole, vorteilhaft möglichst nahe und gut sichtbar beim Piloten (allgemein Fahrzeuglenker). Der Einbau des zweiten Anzeigegeräts 20 erfolgt vorteilhaft in der Sichtlinie des Piloten nahe an der Cockpitscheibe 50. Zudem erkennt man weitere, für den Hubschrauber-Piloten notwendige Bedienhebel/-elemente, wie den Steuerknüppel bzw. Hebel zur Rotor-Blattverstellung 30.

Das zweite Anzeigegerät 20 kann insbesondere als Display (z.B. LCD- oder Plasmabildschirm), Touchscreen, Head-up Display oder anderes projizierendes Gerät ausgebildet sein, wobei auch eine Kombination oder eine Mehrzahl der genannten Geräte vorliegen kann. Seine Auflösung wird vorteilhaft so gewählt, dass Karteninformationen für den Piloten in ausreichender Qualität dargestellt werden können.

Das erste Anzeigegerät 10 ist in dieser Ausführung als Tablet-Computer ausgebildet und weist einen berührungsempfindlichen Bildschirm (Multi-Touchscreen) und eine baulich integrierte CPU auf. Es handelt sich somit um ein mobiles Gerät, und entsprechend sind seine Anschlüsse so ausgebildet, dass ein schneller und unkomplizierter Ein- und Ausbau an dem vorgesehenen Ort im Cockpit möglich ist (z.B. ein Adapter mit gesteckten Anschlüssen, Dockingstation).

Das erste Anzeigegerät 10 weist zwei separate Bedienungsmodi auf. Im ersten Modus, dem Planungsmodus ist der Bildschirm des ersten Anzeigegeräts 10 zur Eingabe und Ausgabe eingerichtet. Dies entspricht der üblichen Funktionsweise eines Tablet-PCs, insbesondere mit interaktiven Buttons auf der Bildschirmanzeige sowie der Möglichkeit zur Steuerung über Gesten. In einem Durchführungsmodus ist der Bildschirm des ersten Anzeigegeräts 10 ausschließlich zur indirekten Eingabe per Gestensteuerung in der Art eines Multi-Touchpad eingerichtet. Eine Ausgabe und Darstellung von Informationen erfolgt in diesem Modus nicht.

Ein Zusammenwirken zwischen ersten und zweiten Anzeigegerät 10, 20 wird derart bewirkt, dass die über den Bildschirm des ersten Anzeigegeräts 10 im Durchführungsmodus vorzunehmenden Eingaben zur Steuerung der Anzeige auf dem zweiten Anzeigegerät 20 dienen.

Die Eingabe und Ausgabe auf dem ersten Anzeigegerät 10 während des Planungsmodus beinhaltet beispielsweise die Eingabe der Karteninformationen, Startund Endpunkt inkl. etwaiger Zwischenziele sowie weiterer relevanter Parameter z.B. Funkfrequenzen etc. und die Ausgabe d.h. Anzeige der Daten bzw. Karteninformationen.

Nach Abschluss der Planungstätigkeit kann in einem Durchführungsmodus der Bildschirm des ersten Anzeigegeräts 10 ausschließlich zur indirekten Eingabe per Gestensteuerung in der Art eines Multi-Touchpad verwendet werden.

Der Wechsel der Bedienungsmodi zwischen Planungsmodus und Durchführungsmodus erfolgt, wie in Fig. 2 erläutert ist, über Gestensteuerung. In den Bildteilen Fig. 2 A bis C erkennt man in drei zeitlich aufeinanderfolgenden Zuständen die Funktionsweise des Systems beim Wechsel der Bedienungsmodi. Zur besseren Nachvollziehbarkeit sind die beiden Anzeigegeräte 10, 20 jeweils übereinander angeordnet dargestellt. Dabei ist das System eingerichtet, den Bildschirminhalt 70 (schraffiert) vom ersten Anzeigegerät 10 auf das zweite Anzeigegerät 20 zu übertragen, wobei das Übertragen durch Verschieben der Verschiebe-/ Seiten-Leiste 60 erfolgt. Auch andere Varianten wie ein Wechsel durch einen Mehrfingerklick oder eine andere Geste sind möglich.

In Bildteil A ist das erste Anzeigegerät 10 im Planungsmodus, wobei auf dem zweiten Anzeigegerät 20 keine Ausgabe erfolgt. Alternativ (nicht dargestellt) können auf dem Anzeigegerät 20 Informationen in der Form einer Spiegelung, Erweiterung der Anzeigefläche des ersten Anzeigegeräts 10, oder zusätzliche Informationen angezeigt werden.

Der Übergang zum Durchführungsmodus ist in Bildteil B zu sehen. Angreifend an der Verschiebeleiste 60 wird z.B. mit einer Schiebegeste der Bildschirminhalt 70 (bzw. die relevanten Planungsdaten) auf das zweite Anzeigegerät geschoben. Man erkennt in Bildteil B, dass der Bildschirminhalt des ersten Anzeigegeräts 10 schon partiell auf dem zweiten Anzeigegerät 20 erscheint. In Bildteil C sieht man den Zustand nach Erreichen des Bedienungsmoduswechsels, wobei der Bildschirminhalt 70 des ersten Anzeigegeräts 10 (bzw. das Ergebnis der Planungsaktivität aus dem Planungsmodus z.B. die Kartendaten) nun vollständig auf dem zweiten Anzeigegerät 20 dargestellt wird. Die Verschiebleiste 60 erscheint nun am oberen Rand des Bildschirm des ersten Anzeigegeräts 10. In diesem Durchführungsmodus ist der Bildschirm des ersten Anzeigegeräts 10 ausschließlich zur indirekten Eingabe per Gestensteuerung in der Art eines Multi-Touchpad eingerichtet.

In diesem Bedienungsmodus dient das erste Anzeigegerät 10 als reines Eingabegerät. Dabei erfolgen die Eingaben ausschließlich über Gesten, so dass die Eingaben blind erfolgen können. Der Pilot kann seine Blickrichtung nach außen beibehalten und wird durch die vorzunehmenden Eingaben nicht abgelenkt. Solche Gesten können z.B. das Vergrößern und Drehen der Anzeige sein, indem man zwei Finger spreizt oder sie um einen gemeinsamen Mittelpunkt dreht. Ein anderes Beispiel ist das Ziehen des Fingers über das Touchpad, wobei der Cursor auf dem Bildschirm gesteuert wird. Ein leichtes Tippen des Fingers kann z.B. einen Klick simulieren. Einen Doppelklick erzeugt man entsprechend durch zweimaliges Tippen. Hält man nach dem zweiten Tippen den Finger auf dem Touchpad, so kann man Objekte (Symbole) markieren bzw. bewegen (ziehen).

Die über das Anzeigegerät 10 vorzunehmenden Eingaben dienen zur Steuerung der Anzeige auf dem zweiten Anzeigegerät 20. Die visuelle Reaktion auf die Eingabe erfolgt also auf dem zweiten Anzeigegerät.

Der Wechsel vom Durchführungsmodus zurück zum Planungsmodus erfolgt durch die Bewegung des Fingers von der Verschiebeleiste 60 am oberen Bildschirmrand des ersten Anzeigegeräts 10 zum unteren Bildschirmrand gemäß Fig. 2 C bis 2 A in umgekehrter Reihenfolge in der bekannten Bedienung eines Touchpads bzw. Touchscreens. Bei anderen Ausführungsformen kann dies auch über eine andere Geste, z.B. eine Mehrfingereingabe erfolgen.

## Patentansprüche

1. Elektronisches System zur Planung und Durchführung einer mit einem Fahrzeug durchzuführenden Mission, umfassend:
- ein erstes Anzeigegerät, das mit einem berührungsempfindlichem Bildschirm ausgestattet ist,
- ein zweites Anzeigegerät
wobei
das erste Anzeigegerät (10) zwei separate Bedienungsmodi aufweist, wobei in einem Planungsmodus der Bildschirm des ersten Anzeigegeräts (10) zur Eingabe und Ausgabe eingerichtet ist, in einem Durchführungsmodus der Bildschirm des ersten Anzeigegeräts (10) ausschließlich zur indirekten Eingabe per Gestensteuerung in der Art eines Multi-Touchpad eingerichtet ist und keine Ausgabe und Darstellung von Informationen erfolgt, und ein Zusammenwirken zwischen ersten und zweiten Anzeigegerät (10, 20) derart bewirkt werden dass die über den Bildschirm des ersten Anzeigegeräts (10) im Durchführungsmodus vornehmbaren Eingaben zur Steuerung der Anzeige auf dem zweiten Anzeigegerät (20) dienen und die im ersten Anzeigegerät (10) vorhandenen Planungsdaten auf das zweite Anzeigegerät (20) übertragen werden,
wobei im Durchführungsmodus das erste Anzeigegerät (10) als reines Eingabegerät dient, und
**dadurch gekennzeichnet, dass**
das erste Anzeigegerät (10) weiter eingerichtet ist, den Wechsel zwischen den Bedienungsmodi, Planungsmodus und Durchführungsmodus zu bewirken.

2. Elektronisches System nach Anspruch 1,
**dadurch gekennzeichnet, dass** das zweite Anzeigegerät (20) ein Display, einen Touchscreen, ein Head-up Display oder ein anderes projizierendes Gerät umfasst, wobei auch eine Kombination oder eine Mehrzahl der genannten Geräte vorliegen kann.

3. Elektronisches System nach einem der vorangehenden Ansprüche, **dadurch gekennzeichnet, dass** das erste Anzeigegerät (10) einen Bildschirm mit berührungsempfindlicher Multi-Touch-Oberfläche sowie einer Datenverarbeitungseinheit CPU aufweist, wobei die Datenverarbeitungseinheit CPU mit dem Bildschirm nach Art eines Tablets integriert sein kann oder baulich separiert vom Bildschirm vorliegen kann.

4. Elektronisches System nach einem der vorangehenden Ansprüche,
**dadurch gekennzeichnet, dass** im Planungsmodus des ersten Anzeigegeräts (10) auf dem zweiten Anzeigegerät (20) Daten angezeigt werden können, wobei die angezeigten Daten eine Spiegelung oder Erweiterung der Anzeigefläche des ersten Anzeigegeräts (10), oder zusätzliche Informationen beinhalten können.

5. Elektronisches System nach einem der vorangehenden Ansprüche,
**dadurch gekennzeichnet, dass** es eine Schnittstelle aufweist, die einen Datenaustausch mit einem zweiten, gleichartigen elektronischen System ermöglichen kann, wobei der Datenaustausch Planungsdaten oder Steuerdaten beinhalten kann.

6. Verfahren zur Planung und Durchführung einer mit einem Fahrzeug durchzuführenden Mission, mit folgenden Verfahrensschritten:
Planung der Mission in einem ersten Bedienungsmodus eines ersten Anzeigegeräts (10), das mit einem berührungsempfindlichem Bildschirm ausgestattet ist, wobei über den berührungsempfindlichen Bildschirm sowohl eine Eingabe als auch eine Ausgabe von Daten durchgeführt wird,
Umschalten des ersten Anzeigegeräts (10) von dem ersten Bedienungsmodus in einen zweiten Bedienungsmodus zur Anzeige und Durchführung der Mission, bei dem der Bildschirm des ersten Anzeigegeräts (10) die Funktion eines Multi-Touchpads übernimmt, wobei über den Bildschirm ausschließlich indirekte Eingaben mittels Gestensteuerung durchgeführt werden und keine Ausgabe und Darstellung von Informationen erfolgt, und diese Eingaben die Anzeige auf dem zweiten Anzeigegerät (20) steuern und die im ersten Anzeigegerät (10) vorhandenen Planungsdaten auf das zweite Anzeigegerät (20) übertragen werden,
wobei im Durchführungsmodus das erste Anzeigegerät (10) als reines Eingabegerät dient,
Bewirken, durch das erste Anzeigegerät (10), des Wechsels zwischen den Bedienungsmodi, Planungsmodus und Durchführungsmodus.

## Claims

1. Electronic system for planning and executing a mission to be carried out with a vehicle, comprising:
- a first display device equipped with a touch-sensitive screen,
- a second display device
the first display device (10) having two separate operating modes, in a planning mode the screen of the first display device (10) being configured for input and output, in an execution mode the screen of the first display device (10) being configured exclusively for indirect input via gesture control in the manner of a multi-touchpad and no information being output or displayed, and the interaction between the first and the second display device (10, 20) being brought about in such a way that the inputs that can be made via the screen of the first display device (10) in the execution mode are used to control the display on the second display device (20), and the planning data present in the first display device (10) are transmitted to the second display device (20),
in the execution mode the first display device (10) being used as a pure input device, and **characterized in that** the first display device (10) is further configured to bring about the change between the planning and execution operating modes.

2. Electronic system according to claim 1,
**characterized in that** the second display device (20) comprises a display, a touch screen, a head-up display or another projecting device, with a combination or a plurality of said devices also being possible.

3. Electronic system according to either of the preceding claims, **characterized in that** the first display device (10) has a screen having a touch-sensitive multi-touch surface and a data processing unit CPU, it being possible for the data processing unit CPU to be integrated with the screen in the manner of a tablet or to be structurally separate from the screen.

4. Electronic system according to any of the preceding claims,
**characterized in that** in the planning mode of the first display device (10) data can be displayed on the second display device (20), it being possible for the displayed data to contain a reflection or expansion of the display area of the first display device (10) or for said data to contain additional information.

5. Electronic system according to any of the preceding claims,
**characterized in that** it has an interface that can allow data to be exchanged with a second, similar electronic system, it being possible for the data exchange to contain planning data or control data.

6. Method for planning and executing a mission to be carried out with a vehicle, comprising the following method steps:
planning the mission in a first operating mode of a first display device (10) which is equipped with a touch-sensitive screen, wherein data are both input and output via the touch-sensitive screen,
switching the first display device (10) from the first operating mode to a second operating mode in order to display and execute the mission, in which second operating mode the screen of the first display device (10) takes on the function of a multi-touchpad, wherein exclusively indirect inputs by means of gesture control are executed and no information is output or displayed via the screen, and these inputs control the display on the second display device (20) and the planning data present in the first display device (10) are transmitted to the second display device (20),
wherein in the execution mode the first display device (10) is used as a pure input device,
bringing about, by means of the first display device (10), the change between the planning and execution operating modes.

## Revendications

1. Système électronique permettant la planification et la réalisation d'une mission à réaliser avec un véhicule, comprenant :
- un premier dispositif d'affichage équipé d'un écran tactile,
- un second dispositif d'affichage
dans lequel
le premier dispositif d'affichage (10) présente deux modes de fonctionnement séparés, dans un mode de planification, l'écran du premier dispositif d'affichage (10) est configuré pour l'entrée et la sortie, dans un mode de réalisation, l'écran du premier dispositif d'affichage (10) est configuré exclusivement pour l'entrée indirecte par l'intermédiaire d'une commande gestuelle du type pavé tactile multipoint et aucune information n'étant sortie ou affichée, et les premier et second dispositifs d'affichage (10, 20) interagissant de telle sorte que les entrées pouvant être effectuées par l'intermédiaire de l'écran du premier dispositif d'affichage (10) dans le mode de réalisation servent à la commande de l'affichage sur le second dispositif d'affichage (20) et les données de planification présentes dans le premier dispositif d'affichage (10) sont transmises au second dispositif d'affichage (20),
dans lequel le premier dispositif d'affichage (10) sert uniquement de dispositif d'entrée dans le mode de réalisation, et
**caractérisé en ce que**
le premier dispositif d'affichage (10) est en outre configuré pour entraîner le changement entre les modes de fonctionnement, le mode de planification et le mode de réalisation.

2. Système électronique selon la revendication 1,
**caractérisé en ce que** le second dispositif d'affichage (20) comprend un affichage, un écran tactile, un affichage tête haute ou un autre dispositif de projection, une combinaison ou une pluralité desdits dispositifs pouvant également être prévue.

3. Système électronique selon l'une des revendications précédentes, **caractérisé en ce que** le premier dispositif d'affichage (10) présente un écran comportant une surface tactile multipoint et une unité de traitement de données CPU, l'unité de traitement de données CPU pouvant être intégrée avec l'écran comme une tablette ou pouvant être prévue comme étant structurellement séparée de l'écran.

4. Système électronique selon l'une des revendications précédentes,
**caractérisé en ce que**, dans le mode de planification du premier dispositif d'affichage (10), des données peuvent être affichées sur le second dispositif d'affichage (20), les données affichées pouvant contenir une réflexion ou une expansion de la zone d'affichage du premier dispositif d'affichage (10) ou des informations supplémentaires.

5. Système électronique selon l'une des revendications précédentes,
**caractérisé en ce qu'**il présente une interface pouvant permettre un échange des données avec un second système électronique du même type, l'échange de données pouvant contenir des données de planification ou des données de commande.

6. Procédé permettant la planification et la réalisation d'une mission à réaliser avec un véhicule, comportant les étapes de procédé suivantes :
planification de la mission dans un premier mode de fonctionnement d'un premier dispositif d'affichage (10) équipé d'un écran tactile, une entrée et une sortie de données étant réalisées par l'intermédiaire de l'écran tactile,
commutation du premier dispositif d'affichage (10) du premier mode de fonctionnement à un second mode de fonctionnement pour l'affichage et la réalisation de la mission,
dans lequel l'écran du premier dispositif d'affichage (10) assume la fonction d'un pavé tactile multipoint, seulement des entrées indirectes étant réalisées par l'intermédiaire de l'écran à l'aide d'une commande gestuelle et aucune information n'étant sortie ou affichée, et lesdites entrées commandant l'affichage sur le second dispositif d'affichage (20) et les données de planification présentes dans le premier dispositif d'affichage (10) étant transmises au second dispositif d'affichage (20),
dans lequel le premier dispositif d'affichage (10) sert uniquement de dispositif d'entrée dans le mode de réalisation,
l'entraînement, par le premier dispositif d'affichage (10), du changement entre les modes de fonctionnement, le mode de planification et le mode de réalisation.
